# EUROPÄISCHE PATENTSCHRIFT

(11) **EP 0 902 056 B1**
(45) Veröffentlichungstag und Bekanntmachung des Hinweises auf die Patenterteilung: **25.09.2002**
(21) Anmeldenummer: 98112247.6
(22) Anmeldetag: 02.07.1998
(51) Int. Cl.: C08L 83/00, C08L 83/04, C08K 7/22, C08K 5/54

(54) **Kompressibler Schwefel enthaltender Siliconkautschuk**
Compressible sulphur containing silicon rubber
Caoutchouc de silicone compressible contenant du soufre

(30) Priorität: 18.08.1997 DE 19735813
(43) Veröffentlichungstag der Anmeldung: 17.03.1999
(73) Patentinhaber: Wacker-Chemie GmbH, 81737 München (DE)
(72) Erfinder: Brennenstuhl, Werner, Dr., 84508 Burgkirchen (DE); Mittermeier, Manfred, 84561 Mehring (DE); Rohrmüller, Heinz-Max, 84489 Burghausen (DE); Bosch, Erhard, Dr., 84543 Winhöring (DE); Kovar, Ingomar, Dr., 84489 Burghausen (DE); Matejcek, Klaus-M., Dr., 84489 Burghausen (DE)
(74) Vertreter: Fritz, Helmut, Dr.

(56) Entgegenhaltungen:
- EP-A- 0 771 842
- EP-A- 0 834 534
- US-A- 4 278 587
- US-A- 4 431 755
- US-A- 4 580 794
- US-A- 5 246 973

## Beschreibung

Die Erfindung betrifft zu Elastomeren vernetzende Massen, ein Verfahren zu ihrer Herstellung, Form - und Dichtkörper, die aus diesen Massen hergestellt werden sowie ein Verfahren zu ihrer Herstellung.

Kompressibler Siliconkautschuk ist in US-A 5,258,212 beschrieben. Der dort beschriebene kompressible Siliconkautschuk enthält Hohlkügelchen aus Kunststoff, Glas oder Kieselglas. Dieser Siliconkautschuk wird verwendet, um ein Festplattengehäuse mittels einer raupenartigen Dichtung abzudichten, die mittels einer besonderen Vorrichtung aufgetragen wird.

In US-A 4,580,794 werden Siliconelastomere beschrieben, die Hohlkügelchen, die aus Epoxymaterial, Glas, Metal, Keramik und ähnlichen Materialien bestehen, enthalten. Diese Elastomere sollen als Dichtmaterialien eine verbesserte Öl- und Druckbeständigkeit zeigen.

In US-A 5,246,973 werden geschäumte Siliconelastomere zur Verfügung gestellt. Diese Elastomere werden unter Verwendung einer Mischung aus Siliconelastomer mit thermisch expandierbaren Hohlkügelchen, die in ihrem Inneren eine flüchtige Substanz wie Butan oder Isobutan etc. enthalten, hergestellt. Diese Mischung wird erhitzt, um die flüchtigen Substanzen aus den expandierbaren Hohlkügelchen freizusetzen und das Siliconelastomer aufzuschäumen.

Aufgabe der Erfindung ist es, die Nachteile des Standes der Technik zu überwinden und insbesondere kompressible Siliconelastomere zur Verfügung zu stellen, die in einem einfachen, wirtschaftlichen Verfahren schnell hergestellt und verarbeitet werden können.

Die erfindungsgemäßen Massen haben vorzugsweise eine Viskosität von 1000 bis 2000 000 mPa·s, bevorzugt von 100 000 - 1500 000 mPa·s und besonders bevorzugt von 500 000 bis 1000 000 mPa·s.

Als Kunststoffhohlkörper (A) werden als Bestandteil I vorzugsweise Hohlkörper auf der Grundlage von organischem Polymermaterial, wie vorzugsweise Polyacrylnitril, Polyvinylchloride, Polyvinylacetate, Polyester, Polycarbonate, Polyethylene, Polystyrene, Polymethylmethacrylate, Polyvinylalkohole, Ethylcellulose, Nitrocellulose, Benzylzellulose, Epoxyharze, Hydroxypropyl-methylcellulose-phthalat, Copolymere von Vinylchlorid und Vinylacetat, Copolymere von Vinylacetat und Celluloseacetatbutyrat, Copolymere von Styrol und Maleinsäure, Copolymere von Acrylonitril und Styrol, Copolymere von Vinylidenchlorid und Acrylnitril und ähnliche verwendet. Verfahren zur Herstellung derartiger Kunststoffhohlkörper sind bekannt, insbesondere werden derartige Verfahren in EP-B 348 372 HCASCO NOBEL AG) und den dort zitierten US-A 3,615,972, US-A 4,397,799 und EP-A-112807 beschrieben.

Vorzugsweise handelt es sich um expandierte Kunststoffhohlkörper mit einem Durchmesser von 1 bis 800 µm, bevorzugt von 5-100 µm und besonders bevorzugt von 10 bis 80 µm. Die Dichte beträgt an der Luft vorzugsweise 10 bis 100 kg/m³, bevorzugt 20 bis 80 kg/m³ und besonders bevorzugt 20 bis 60 kg/m³. Ganz besonders bevorzugt sind die Kunststoffhohlkörper mit dem Handelsnamen Expancel 091 DE, einem Produkt von Expancel Nobel Industries. Diese Kunststoffhohlkörper werden in Mengen von vorzugsweise 0,1 bis 30 Gew.%, bevorzugt von 0,2 bis 10 Gew.% und besonders bevorzugt von 0,5 bis 3 Gew.% verwendet.

Gegenstand der Erfindung sind zu Elastomeren vernetzende Massen, auf der Basis von
(A) Kunststoffhohlkörpern
(B) additionsvernetzbaren Organosiliciumverbindungen
(C) eines Silans mit schwefelhaltigen funktionellen Gruppen, und gegebenenfalls weiteren organischen Schwefelverbindungen.

Bei den erfindungsgemäßen Massen handelt es sich um an sich bekannte additionsvernetzende Siliconkautschukmassen.

Die erfindungsgemäßen additionsvernetzenden Siliconkautschukmassen umfassen die Bestandteile:
als (A) Bestandteil I Kunstoffhohlkörper wie oben definiert,
als (B) additionsvernetzbare Organosiliciumverbindung, vorzugsweise ein Polyorganosiloxan (II) oder bevorzugt eine Mischung aus einem
(IIa) Polyorganosiloxan mit mindestens zwei Alkenylgruppen pro Molekül,
   einem
(IIb) Polyorganosiloxan mit 2 endständigen Si-H-Gruppen,
   einem
(III) Polyorganosiloxan mit mindestens zwei SiH-Gruppen pro Molekül als Vernetzer und als
   Katalysator einen
(IV) Hydrosilylierungskatalysator.

Als Polyorganosiloxane (II) wird vorzugsweise eine Mischung aus einem Polydimethylsiloxan mit mindestens zwei endständigen Alkenylgruppen (IIa) und einem Polydimethylsiloxan mit mindestens zwei endständigen Si-H-Gruppen (IIb) verwendet.

Bestandteil (IIa) der erfindungsgemäßen Siliconkautschukmassen ist ein mindestens zwei Alkenylgruppen pro Molekül enthaltendes Polyorganosiloxan mit einer Viskosität bei 25°C im Bereich von vorzugsweise 500 bis 50 000 mPa·s, bevorzugt von 500 bis 5000 mPa·s für fließfähige Massen und bevorzugt 15 000 bis 25 000 mPa·s für standfeste Massen. Bestandteil (IIa) wird in Mengen, die vorzugsweise zwischen 10-98 Gew.% und bevorzugt zwischen 20-80 Gew.% und besonders bevorzugt 50-70 Gew.% liegen, eingesetzt.

Bestandteil (IIb) der erfindungsgemäßen Siliconkautschukmassen ist ein mindestens zwei endständige Si-H-Gruppen pro Molekül enthaltendes Polyorganosiloxan mit einer Viskosität bei 25°C im Bereich von vorzugsweise 100 bis 100000 mPa·s, bevorzugt von 200 bis 20000 mPa·s und besonders bevorzugt 500 bis 5000 mPa·s. Bestandteil (IIb) wird in Mengen, die vorzugsweise zwischen 0-98 Gew.% und bevorzugt zwischen 5-70 Gew.% und besonders bevorzugt 20-40 Gew.% liegen, eingesetzt.

Das Polyorganosiloxan (II) ist aufgebaut aus Einheiten der Formel

RₐR¹ _{b}SiO_{(4-a-b)/2'}

wobei a 0, 1 oder 2 ist, b 0, 1, 2 oder 3 ist, mit der Maßgabe, daß mindestens zwei Reste R in jedem Molekül vorhanden sind und die Summe (a+b) < 4 beträgt.

R stellt eine Alkenylgruppe oder ein Wasserstoffatom dar. Als Alkenylgruppen können sämtliche einer Hydrosilylierungsreaktion mit einem SiH-funktionellen Vernetzungsmittel zugänglichen Alkenylgruppen gewählt werden. Vorzugsweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

R¹ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie Methyl, Ethyl, Propyl, Butyl und Hexyl, Cycloalkylgruppen, wie Cyclopentyl, Cyclohexyl und Cycloheptyl, Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.

Die Alkenylgruppen können in jeder Position der Polymerkette, insbesondere an den endständigen Siliciumatomen gebunden sein.

Bestandteil (IIa) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear, cyclisch oder auch verzweigt sein. Verzweigte Polyorganosiloxane enthalten neben monofunktionellen Einheiten, wie RR¹₂SiO_{1/2} und R¹₃SiO_{1/2}, und difunktionellen Einheiten, wie R¹₂SiO_{2/2} und RR¹SiO_{2/2}, auch trifunktionelle Einheiten, wie R¹SiO_{3/2} und RSiO_{3/2}, und/oder tetrafunktionelle Einheiten der Formel SiO_{4/2}, wobei R und R¹ die oben dafür angegebene Bedeutung haben. Der Gehalt an diesen zu verzweigten Polyorganosiloxanen führenden tri- und/oder tetrafunktionellen Einheiten, der typischerweise sehr gering ist, d.h. weniger als 0,1 Mol-% beträgt, sollte 20 Mol-% nicht wesentlich überschreiten. Das Alkenylgruppen enthaltende Polyorganosiloxan kann auch Einheiten der allgemeinen Formel
-OSi(R²R³)R⁴Si(R²R³)O- enthalten, wobei sowohl R² als auch R³ die vorstehend für R und R¹ angegebene Bedeutung haben und R⁴ einen bivalenten organischen Rest, wie Ethylen, Propylen, Phenylen, Diphenylen oder Polyoxymethylen, bezeichnet. Derartige Einheiten können bis zu einem Anteil von 50 Mol-% im Bestandteil (II) enthalten sein.

Besonders bevorzugt ist die Verwendung Vinylgruppen enthaltender Polydimethylsiloxane, deren Moleküle der Formel

(ViMe₂SiO_{1/2})₂(ViMeSiO)ₐ(Me₂SiO)_{b}

entsprechen, wobei a und b nichtnegative Zahlen sind und folgende Relationen erfüllen: a+1>0, 50<(a+b)<2200, vorzugsweise 200<(a+b)<1000, und 0<(a+1)/(a+b)<0,2.

Bei der weiteren organischen Schwefelverbindung (C) handelt es sich vorzugsweise um eine organische Schwefelverbindung, z.B. aus der Gruppe der Thiole (Mercaptane, wie z.B. Alkylthiole, Arylthiole, Mercaptoheterocyclen wie Mercaptoimidazole, Mercaptobenzimidazole), Keten-S,X-acetale, mit X bevorzugt gleich N oder S, Thioacetale, Sulfane (Thioether), Disulfane (Dithioether), Polysulfane, Thioamide, Thioharnstoffe, Thiurame (Thiurammono-, di- oder polysulfide, Bisthiocarbamoylmono-, di- oder polysulfane), Thiuroniumsalze, Thiocarbamate, Dithiocarbamate und deren Zn-, Fe-, Ni-, Co- oder Cu-Salze, Thiocyanate, Isothiocyanate, Thiocarbonylverbindungen (wie z.B. Thioaldehyde, Thioketone, Thiolactone, Thiocarbonsäuren), Thia-Heterocyclen (wie z.B. Thiophen, 1,2- oder 1,3-Dithiole bzw. 1,2- oder 1,3-Dithiol-thione, Thiazole, Mercaptothiazole, Mercaptothiadiazole, Benzo-dithiole bzw. Benzo-dithiol-thione, Benzthiazole, Mercaptobenzthiazole, Phenothiazine, Thianthrene). Das Silan mit schwefelhaltigen funktionellen Gruppen ist z.B. ein Mercaptoalkyl-alkyl-alkoxysilan der allgemeinen Formel (1),

(1) (R⁵O)₃₋ₙR⁶ ₙSi-R⁷-SH

ein Bis-(trialkoxysilyl-alkyl)mono-, di- oder polysulfan der allgemeinen Formel (2), ein Thiocyanatoalkyltrialkoxysilan der allgemeinen Formel (3), die Gegenwart eines Füllstoffes,

(2) [(R⁸O)₃Si-R⁹-]₂-Sₙ (3) (R¹⁰O)₃Si-R¹¹-SCN

bevorzugt Kieselsäuren, auf den diese Silane mit schwefelhaltigen funktionellen Gruppen aufgebracht, umgesetzt oder abgemischt wurden, z.B. hochdisperses Siliciumdioxid, und bzw. oder die Gegenwart eines thiofunktionellen Siloxans, z.B. eines Polydimethylsiloxan-co-mercaptoalkyl-, bevorzugt -ethylund -propyl-, siloxans in mindestens einem Teil der mehrteiligen Zusammensetzung, bevorzugt dem H-Siloxan-haltigen Teil.

R⁵ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl.

R⁶ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie vorzugsweise Methyl, Ethyl, Propyl, Butyl und Hexyl, Cycloalkylgruppen, wie Cyclopentyl, Cyclohexyl und Cycloheptyl; Arylund Alkarylgruppen, wie Phenyl, Tolyl, Xylyl, Mesityl, Benzyl.

R⁷ stellt einen substituierten oder nichtsubstituierten, aliphatisch gesättigten, bivalenten Kohlenwasserstoffrest mit 1 bis 10 Kohlenstoffatomen, vorzugsweise 1 bis 6 Kohlenstoffatomen, dar. Beispiele hierfür sind die Alkylengruppen, wie vorzugsweise Methylen, Ethylen, Propylen, Butylen, Hexylen, Phenylen, besonders bevorzugt Propylen.
R⁸ und R¹⁰ haben die Bedeutung von R⁵.
R⁹, R¹¹ haben die Bedeutung von R⁷.
n hat die Bedeutung von n = 1-10, bevorzugt n = 2 oder 4.

Es können auch Gemische dieser organischen Schwefelverbindungen eingesetzt werden.

Die organische schwefelverbindung oder ihre Gemische werden in Mengen von 0,0001 Gew.% - 2 Gew.%, bevorzugt 0,001 Gew.% - 0,2 Gew.%, besonders bevorzugt 0,005 - 0,15 % bezogen auf das Gesamtgewicht der Zusammensetzung, eingesetzt.

Als Vernetzer (D) wird Bestandteil (III) bei der Additionsvernetzung der erfindungsgemäßen Siliconkautschukmasse eingesetzt, das vorzugsweise ein SiH-funktionelles Polyorganosiloxan ist, das aufgebaut ist aus Einheiten der nachfolgenden Formel

H_{c}R¹ _{d}SiO_{(4-c-d)/2'},

wobei c 0, 1 oder 2 ist, d 0, 1, 2 oder 3 ist, mit der Maßgabe, daß die Summe (c+d) < 4 ist und daß mindestens zwei siliciumgebundene Wasserstoffatome pro Molekül vorhanden sind und R¹ die oben dafür angegebene Bedeutung hat.

Bevorzugt ist die Verwendung eines drei oder mehr SiH-Bindungen pro Molekül enthaltenden Polyorganosiloxans. Bei Verwendung eines nur zwei SiH-Bindungen pro Molekül aufweisenden Bestandteils (III) enthält das Alkenylgruppen enthaltende Polyorganosiloxan (II) vorzugsweise mindestens drei Alkenylgruppen pro Molekül.

Das Polyorganosiloxan (III) wird als Vernetzer eingesetzt. Der Wasserstoffgehalt des Vernetzers, welcher sich ausschließlich auf die direkt an Siliciumatome gebundenen Wasserstoffatome bezieht, liegt im Bereich von 0,002 bis 1,7 Gew.-% Wasserstoff, vorzugsweise zwischen 0,1 und 1,7 Gew.% Wasserstoff.

Das Polyorganosiloxan (III) enthält vorzugsweise mindestens drei und vorzugsweise höchstens 600 Siliciumatome pro Molekül. Besonders bevorzugt ist die Verwendung von SiH-Vernetzern, die zwischen 4 und 200 Siliciumatome pro Molekül enthalten.

Die Struktur des Polyorganosiloxans (III) kann linear, verzweigt, cyclisch oder netzwerkartig sein. Lineare und cyclische Polyorganosiloxane (III) sind aus Einheiten der Formel HR¹₂SiO_{1/2}, R¹₃SiO_{1/2}, HR¹SiO_{2/2} und R¹₂SiO_{2/2} zusammengesetzt, wobei R¹ die vorstehend dafür angegebene Bedeutung hat. Verzweigte und netzwerkartige Polyorganosiloxane (III) enthalten zusätzlich trifunktionelle Einheiten, wie HSiO_{3/2} und R¹SiO_{3/2}, und/oder tetrafunktionelle Einheiten der Formel SiO_{4/2}. Mit zunehmendem Gehalt an tri- und/oder tetrafunktionellen Einheiten weisen diese Vernetzungsmittel eine netzwerkartige, harzartige Struktur auf. Die im Polyorganosiloxan (III) enthaltenen organischen Reste R¹ werden üblicherweise so gewählt, daß diese mit den im Bestandteil (II) befindlichen organischen Resten verträglich sind, so daß die Bestandteile (II) und (III) mischbar sind.

Als Vernetzer können auch Kombinationen und Mischungen der hier beschriebenen Polyorganosiloxane (III) verwendet werden.

Besonders bevorzugte Polyorganosiloxane (III) haben die Formel

(HR¹ ₂SiO_{1/2})ₑ(R¹ ₃SiO_{1/2})_{f}(HR¹SiO_{2/2})_{g}(R¹ ₂SiO_{2/2})ₕ,

wobei die nichtnegativen ganzen Zahlen e, f, g und h folgende Relationen erfüllen: (e+f) = 2, (e+g)>2, 5<(g+h)<200 und 0,1<g/(g+h)≦1 und R¹ die oben dafür angegebene Bedeutung hat.

Das Polyorganosiloxan (III) ist vorzugsweise in einer solchen Menge in der härtbaren Siliconkautschukmasse enthalten, daß das Molverhältnis von SiH-Gruppen zu Alkenylgruppen vorzugsweise zwischen 0,5 und 5, bevorzugt zwischen 1,0 und 3,0, liegt.

Bestandteil III wird in Mengen von 0,1 bis 15 Gew.%, bevorzugt in Mengen von 2 bis 8 Gew.% und besonders bevorzugt 3 bis 6 Gew.% eingesetzt.

Bestandteil (IV) dient als Katalysator für die Additionsreaktion (Hydrosilylierung) zwischen den Alkenylgruppen des Bestandteils (II) und den siliciumgebundenen Wasserstoffatomen des Bestandteils (III). In der Literatur wurden zahlreiche geeignete Hydrosilylierungskatalysatoren beschrieben. Prinzipiell können alle üblicherweise in additionsvernetzenden Siliconkautschukmassen eingesetzten Hydrosilylierungskatalysatoren verwendet werden.

Als Hydrosilylierungskatalysator können Metalle, wie Platin, Rhodium, Palladium, Ruthenium und Iridium, vorzugsweise Platin, die gegebenenfalls auf feinteiligen Trägermaterialien, wie Aktivkohle, Aluminiumoxid oder Siliciumdioxid, fixiert sind, eingesetzt werden.

Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂·Olefin)₂ und H(PtCl₃·Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂·C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbikarbonat in ethanolischer Lösung. Besonders bevorzugt sind Komplexe des Platins mit Vinylsiloxanen, wie sym-Divinyltetramethyldisiloxan.

Der Hydrosilylierungskatalysator kann auch in mikroverkapselter Form eingesetzt werden, wobei der den Katalysator enthaltende und im Polyorganosiloxan unlösliche feinteilige Feststoff beispielsweise ein Thermoplast (Polyesterharze, Siliconharze) ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators richtet sich nach der gewünschten Vernetzungsgeschwindigkeit sowie nach ökonomischen Gesichtspunkten. Bei Verwendung gebräuchlicher Platin-Katalysatoren liegt der Gehalt der härtbaren Siliconkautschukmasse bezogen auf Platin-Metall vorzugsweise im Bereich von 0,1 bis 500 Gew.-ppm, vorzugsweise zwischen 10 und 100 Gew.-ppm Platin-Metall. Ansonsten wird der Katalysator gegebenenfalls zusammen mit einem Inhibitor vorzugsweise in Mengen von 0,01 bis 5 Gew.% eingesetzt.

Es können noch weitere Zusätze in den erfindungsgemäßen Massen enthalten sein, so können wahlweise weitere Zusätze zu einem Anteil von bis zu 85 Gew.-%, vorzugsweise zwischen 0,5 und 20 Gew.-%, in der Siliconkautschukmasse enthalten sein. Diese Zusätze können z.B. Füllstoffe, Dispergierhilfsmittel, Haftvermittler, Inhibitoren, Pigmente, Farbstoffe, Additive zur Erhöhung der Schwerbrennbarkeit, Weichmacher usw. sein. Hierzu zählen Zusätze, wie Quarzmehl, Diatomeenerde, Tone, Kreide, Lithopone, Ruße, Graphit, Metalloxide, -karbonate, -sulfate, Metallstäube, Fasern, Farbstoffe, Pigmente usw..

Beispiele für Füllstoffe sind verstärkende Füllstoffe, also Füllstoffe mit einer spezifischen Oberfläche nach BET von mindestens 50 m²/g, vorzugsweise 50 - 500 m²/g, wie pyrogen erzeugte Kieselsäure, unter Erhalt der Struktur entwässerte Kieselsäurehydrogele, also sogenannte "Aerogele", und andere Arten von gefälltem Siliciumdioxid; und nicht verstärkende Füllstoffe, also Füllstoffe mit einer spezifischen Oberfläche nach BET von weniger als 50 m²/g, wie Quarzmehl, Diatomeenerde, Calciumsilikat, Zirkoniumsilikat, Zeolithe, Eisenoxid, Zinkoxid, Titandioxid, Aluminiumoxid, Calciumcarbonat, Magnesiumcarbonat, Zinkcarbonat, Ruß, Glimmer und Kreide. Die genannten Füllstoffe können durch die Behandlung mit den vorstehend genannten Hydrophobierungsmitteln hydrophobiert sein.

Beispiele für Weichmacher sind bei Raumtemperatur flüssige, durch Triorganosiloxygruppen endblockierte Diorganopolysiloxane, wie durch Trimethylsiloxygruppen endblockierte Dimethylpolysiloxane mit einer Viskosität von 10 bis 10 000 mPa·s bei 25°C.

Insbesondere können harzartige Polyorganosiloxane, die im wesentlichen aus Einheiten der Formeln R¹₃SiO_{1/2}, R¹SiO_{3/2} und/oder SiO_{4/2}, gegebenenfalls auch R¹₂SiO_{2/2}, bestehen, bis zu einem Anteil von 50 Gew.-%, vorzugsweise bis zu 20 Gew.-%, bezogen auf das Gesamtgewicht des Siliconkautschuks, enthalten sein. Das Molverhältnis zwischen monofunktionellen und trioder tetrafunktionellen Einheiten dieser harzartigen Polyorganosiloxane liegt vorzugsweise im Bereich von 0,5 : 1 bis 1,5 : 1. Es können auch funktionelle Gruppen, insbesondere Alkenylgruppen, in Form von RR¹₂SiO_{1/2}- und/oder RR¹SiO_{2/2}-Einheiten, enthalten sein.

Enthalten sein können insbesondere Zusätze, die der gezielten Einstellung der Verarbeitungszeit und Vernetzungsgeschwindigkeit der härtbaren Siliconkautschukmasse dienen. Diese an sich bekannten Inhibitoren und Stabilisatoren sind beispielsweise: acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siloxanöle mit Vinyldimethylsiloxy-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphine, Phosphite, Nitrile, Diaziridine und Oxime.

Ein weiterer Gegenstand der Erfindung ist ein Verfahren zur Herstellung der erfindungsgemäßen Massen.

Die Herstellung der erfindungsgemäßen Massen erfolgt durch Vermischen der Bestandteile nach für die Bereitung von Siliconkautschukmassen üblichen Verfahren als 1 oder 2 Komponentenmassen.

Die Verarbeitung der erfindungsgemäßen Massen erfolgt mit üblichen 1-Komponenten- oder 2-Komponenten-Misch- und Dosierenanlagen.

Die additionsvernetzenden Massen werden vorzugsweise 5 min bis 24 h, bei vorzugsweise einer Temperatur von 25 bis 200 °C, bevorzugt 5 min bis 1 h bei einer Temperatur von 100 bis 150°C vernetzt.

Ein weiterer Gegenstand der Erfindung sind kompressible Form-, Dichtkörper oder Vergußmassen, die aus den erfindungsgemäßen Massen oder den nach dem erfindungsgemäßen Verfahren hergestellten Massen hergestellt werden sowie Verfahren zu ihrer Herstellung.

Aus den erfindungsgemäßen Massen lassen sich Vergußmassen, Dichtmassen und Formkörper, wie Dichtungen, z.B. O-Ringe, Rundschnüre, Platten herstellen, die insbesondere für einen Einsatzbereich geeignet sind, bei dem hohe Temperaturschwankungen auftreten, die in einem Bereich von -65 bis 250°C liegen, Derartige Temperaturschwankungen treten insbesondere beim Betrieb von Maschinen oder Fahrzeugen auf, die sich aufgrund ihres Betriebs erwärmen und/oder bei schwankenden Außentemperaturen eingesetzt werden. Dies trifft z.B. für alle Maschinen und Fahrzeuge zu, die mit Otto-Motoren betrieben werden, wie Kraftfahrzeuge, Baumaschinen, stationäre Maschinen, wie Generatoren etc.,

Der Vorteil der erfindungsgemäßen Massen ist, daß diese im Gegensatz zu Siliconkautschukmassen, die keine Kunststoffhohlkörperchen enthalten, hochkompressibel sind. Die Verbesserung der Kompressibilität ist im Vergleich zu Siliconkautschukmassen ohne Kunststoffhohlkörper um den Faktor 20 - 40 mal größer.

Dadurch wird erreicht, daß sehr viel niedrigere Drücke nötig sind, um eine Dichtheit der Gehäuse zu erzielen.

Ein weiterer Vorteil der hohen Kompressibilität ist die Verminderung der thermomechanischen Spannungen bei Temperaturwechseln, da sich das Material zwar bei Erwärmung genauso wie herkömmliche Massen stark ausdehnt, sich aber, wenn es auf einen Widerstand trifft, komprimiert , ohne den Abstand zwischen den abzudichtenden Dichtflächen weiter zu vergrößern, so daß, wenn die Temperatur fällt, immer noch das gleiche Volumen wie während der Ausdehnung eingenommen wird. Dies bedeutet, daß eine Dichtung nicht undicht werden kann, wenn sie Temperaturänderungen ausgesetzt wird. Des weiteren kann ein derartiger Dichtkörper das abzudichtende Gehäuse in Folge einer Erwärmung nicht beschädigen, indem er das Gehäuse z. B. aufsprengt. Vielmehr wird die erfindungsgemäße Masse komprimiert.

Ein weiterer Vorteil der erfindungsgemäßen Massen ist, daß sie sich leicht ohne aufwendige, teure Maschinen, wie zum Beispiel eine 2-Komponenten-Schaumanlage, sondern mit einfacheren 1-und 2-Komponenten-Dosieranlagen vergießen lassen, so daß sich Dichtungen, wie O-Ringe, am Ort ihrer Verwendung herstellen lassen, indem sie in eine Form, wie z.B. eine Nut, eingebracht werden und so am Ort ihrer Verwendung verbleiben, auch wenn der Gegenstand später auseinandergebaut wird. Durch diese Maßnahme wird verhindert, daß der O-Ring unbemerkt herausfällt und der Gegenstand ohne den O-Ring wieder zusammengebaut wird und dann aufgrund des fehlenden O-Rings Folgeschäden auftreten. Dies kann besonders bei Gegenständen, die in der Kraftfahrzeugselektrik eingesetzt werden, zu ungewollten Stillstandszeiten führen, wenn z.B. ein O-Ring bei einem Gegenstand der Kraftfahrzeugselektrik fehlt, das diesen gegen Feuchtigkeit abdichtet. Fehlt dieser O-Ring, so passiert es häufig, daß in diesen Gegenstand, z.B. aufgrund des fehlenden O-Rings, Feuchtigkeit eintritt und die Elektrik somit nicht mehr funktioniert und das Fahrzeug letztlich nicht mehr funktionsfähig ist.

Des weiteren lassen sich aus den erfindungsgemäßen Massen Vergußmassen herstellen. Diese können zum Beispiel verwendet werden, um elektronische Bauteile zu vergießen. Ein Vorteil dieser erfindungsgemäßen Vergußmassen ist, daß sie aufgrund ihrer Kompressibilität die elektronischen Bauteile trotz des hohen Wärmeausdehnungskoeffizienten der Silicone auch bei Temperaturwechsel nicht zerstören, wie es bei herkömmlichen Siliconmassen der Fall ist.

Ein weiterer Vorteil der erfindungsgemäßen Massen ist die im Vergleich zu herkömmlichen Siliconmassen deutlich niedrigere Dichte, die zu einer Gewichtsreduzierung der Bauteile führt, die u.a. bei KFZ-Anwendungen wünschenswert ist, da sie zur Kraftstoffeinsparung beiträgt.

Ein entscheidender Vorteil der erfindungsgemäßen, additionsvernetzenden Massen ist die durch die Verwendung des Si-H-endständigen Dimethylpolysiloxans (IIb) fast beliebig einstellbare Shorehärte. Je nach Verhältnis der Dimethylpolysiloxane (IIa : IIb) lassen sich Shorehärten zwischen 0 und 70 realisieren. Entsprechend variabel können verschiedene Dichtkräfte eingestellt werden.

Die erfindungsgemäßen Formteile zeichnen sich weiter dadurch aus, daß sie gummielastische Formteile mit guten bis sehr guten mechanischen Eigenschaften sind, die sich nach dem erfindungsgemäßen Verfahren wirtschaftlich herstellen lassen. Derartige Formteile lassen sich vorzugsweise durch Vergießen, Spritzgießen und Spitzpressen herstellen. Dies kann grundsätzlich mittels Automaten erfolgen. Dies kann auch ohne eine vorgegebene Form direkt auf eine Oberfläche, z.B. eines Gehäuses, erfolgen. Vorzugsweise erfolgt dies automatisch. Derartige Formteile weisen bei Deformation eine bleibende Verformung auf, den Druckverformungsrest. Diese Verformung ist insbesondere im produktionsfrischen Zustand, wenn also nicht nachgeheizt wird, besonders hoch. Für bestimmte Anwendungen, z.B. Dichtungen im Automobil- und Maschinenbausektor, wo häufig aus technischen oder Kostengründen kein Nachheizen der Teile, also ein Tempern, erfolgt, ist es essentiell, insbesondere bei ungetemperten Teilen einen möglichst niedrigen Druckverformungsrest zu realisieren. Dieses Ziel wird durch die Erfindung erreicht. Allerdings ist auch ein Tempern erfindungsgemäß möglich.

Überraschend ist insbesondere die gute Reproduzierbarkeit des Druckverformungsrests nach Lagerung, wenn die organische Schwefelverbindung in geringer Menge in der Komponente (B) enthalten ist. So ist die Vernetzungsgeschwindigkeit bei den erfindungsgemäßen Formteilen noch nach einer längeren Lagerzeit überraschend geringer, als wenn die organische Schwefelverbindung in der Komponente (A) enthalten wäre. Dies ermöglicht eine Garantie von bis zu sechs Monaten Lagerstabilität auf das konfektionierte Produkt. Daher sind durch die gute Lagerstabilität kurze, konstante Vernetzungszeiten gegeben, die eine schnelle und kontinuierliche Produktion gewährleisten. Das bedeutet, daß die Verarbeitungsmaschinen nicht immer wieder auf ansonsten durch die Lagerung bedingte längere Vernetzungszeiten nachjustiert werden müssen, was zu erheblicher Kostenersparnis führt, und es können aufgrund der kurzen Vernetzungszeit mehr Formteile produziert werden.

Die zu Elastomeren vernetzenden, vulkanisierten und ungetemperten Massen haben einen Druckverformungsrest von vorzugsweise kleiner 50, bevorzugt kleiner 30 und besonders bevorzugt kleiner 20, wobei ein Wert von 0 überhaupt keinen Druckverformungsrest bedeutet. Der Druckverformungsrest wird nach DIN 53517 gemessen.

### Beispiele

### Beispiel 1:

### Herstellung einer standfesten kompressiblen 1-Komponenten Dichtungsmasse

60 Teile einer Grundmischung (bestehend aus 67 Gew. Teilen eines vinylendgestoppten Polydimethylsiloxans mit einer Viskosität von 20 Pas, 32 Gew. Teilen eines mit Hexamethyldisilazan oberflächenmodifizierten pyrogen hergestellten Siliziumdioxids mit einer Oberfläche von 300 m² nach BET und 1 Gew. Teil eines mercaptomodifizierten pyrogen hergestellen Siliziumdioxids nach Beispiel 5 werden mit 33 Gew. Teilen eines vinylendgestoppten Polydimethylpolysiloxan mit einer Viskosität von 20 Pas, 0,25 Gew. Teilen eines Platinkatalysators, 0,5 Gew. Teilen Ethinylcyclohexanol, 2 Gew. Teilen Trimethoxy(3-(oxiranylmethoxy)propyl)-silan, 2,5 Teilen eines Polydimethylsiloxan-co-hydrogenmethylpolysiloxans und 1 Gew. Teil Expancel DE 80 in einem Planetenmischer homogen vermischt.
Die erhaltene pastöse härtbare Siliconmasse wird zu Platten gepreßt und bei 150°C 15 min vulkanisiert.

### Beispiel 2:

### Wie Beispiel 1, jedoch ohne schwefelbehandelte Kieselsäure

### Beispiel 3:

### Herstellung einer fließfähigen, kompressiblen 2-Komponenten-Dichtungsmasse

### Komponente A:

98,6 Gew. Teile eines vinylendständigen Dimethylpolysiloxans mit einer Viskosität von 1000 mPas, 1 Gew. Teil Expancel DE 80, und 0,4 Gew. Teile eines Platinkatalysators werden homogen vermischt.

### Komponente B:

20 Gew. Teile eines vinylendständigen Dimethylpolysiloxans mit einer Viskosität von 1000 mPas, 75 Gew. Teile eines Si-H-endständigen Dimethylpolysiloxan mit einer Viskosität von 1000 mPas, 0,5 Gew. Teile Ethinylcyclohexanol, 1 Gew. Teil Expancel DE 80, 1,5 Gew. Teile eines mercaptomodifizierten pyrogen hergestellen Siliziumdioxids nach Beispiel 5 und 2 Gew. Teile eines Polydimethylsiloxan-co-hydrogenmmethylpolysiloxans werden homogen vermischt.

Die erhaltenen fließfähigen Komponenten A und B werden im Verhältnis 1:1 gemischt, zu Platten gepreßt und bei 150°C 15 min. vulkanisiert.

### Beispiel 4:

### Wie Beispiel 3 jedoch ohne schwefelbehandelte Kieselsäure.

| **Beispiel** | Druckverformungsrest **22h, 120°C** | Druckverformungsrest **22h, 175°C** |
|---|---|---|
| 1 | 15.00 | 36.00 |
| 2 | 34.00 | 55.00 |
| 3 | 35.00 | 54.00 |
| 4 | 55.00 | 78.00 |

### Beispiel 5:

### Herstellung eines mit Organoschwefelverbindungen modifizierten Füllstoffes

Zu 100 g pyrogenen Siliciumdioxids mit einer spezifischen Oberfläche nach BET von 300 m²/g, erhältlich bei der Wacker-Chemie unter dem Namen "Wacker HDK T30", werden bei Raumtemperatur und Normaldruck unter Rühren feinstverteilt 10 g Wasser und anschließend feinstverteilt 12,24 g
3-Mercaptopropyl-trimethoxysilan, erhältlich bei der Wacker-Chemie unter dem Namen "Wacker Silan GF 70", eingemischt. Anschließend wird 1 Stunde bei 80°C getempert. Nach der Reinigung von Reaktionsnebenprodukten unter vermindertem Druck werden 106,1 g eines weißen Pulvers erhalten.

## Patentansprüche

1. Zu Elastomeren vernetzende Massen, auf der Basis von
(A) Kunststoffhohlkörpern
(B) additionsvernetzbaren Organosiliciumverbindungen
(C) eines Silans mit schwefelhaltigen funktionellen Gruppen, und gegebenenfalls weiteren organischen Schwefelverbindungen.

2. Zu Elastomeren vernetzende Massen, nach Anspruch 1, **dadurch gekennzeichnet, daß** sie eine Viskosität von 1000 bis 2000 000 mPa·s haben.

3. Zu Elastomeren vernetzende Massen, nach Anspruch 1 oder 2, **dadurch gekennzeichnet, daß** die (A) Kunststoffhohlkörper eine Dichte von 10 bis 80 kg/m³ und eine Teilchengröße von 5-200 µm haben.

4. Zu Elastomeren vernetzende Massen nach einem der Ansprüche 1, 2 oder 3, **dadurch gekennzeichnet, daß** die organische Schwefelverbindung auf einen anorganischen Füllstoff aufgebracht ist.

5. Zu Elastomeren vernetzende Massen nach einem oder mehreren der Ansprüche 1, 2, 3 oder 4, **dadurch gekennzeichnet, daß** das Silan 3-Mercaptopropyl-trimethoxysilan, 3-Mercaptopropyl-triethoxysilan, Polydimethylsiloxan-co-mercaptoalkylverbindung und/oder die organische Schwefelverbindung Octadecan-1-thiol ist.

6. Verfahren zur Herstellung von zu Elastomeren vernetzenden Massen nach einem oder mehreren der Ansprüche 1 bis 5, **dadurch gekennzeichnet, daß** die Komponenten A, B und C vermischt werden.

7. Form-, Dichtkörper oder Vergußmassen, **dadurch gekennzeichnet, daß** sie aus Massen nach einem oder mehreren der Ansprüche 1 bis 5 oder nach einem Verfahren nach Anspruch 6 hergestellt sind.

8. Verfahren zur Herstellung von Form-, Dichtkörpern oder Vergußmassen nach Anspruch 7, **dadurch gekennzeichnet, daß** Massen nach einem oder mehreren der Ansprüche 1 bis 5 oder hergestellt nach Anspruch 6 in eine Form gegossen werden.

9. Verfahren nach Anspruch 8 zur Herstellung eines Dichtkörpers, **dadurch gekennzeichnet, daß** als Form eine Nut verwendet wird.

10. Verfahren zur Herstellung von Form-, Dichtkörpern oder Vergußmassen nach Anspruch 7, **dadurch gekennzeichnet, daß** Massen nach einem oder mehreren der Ansprüche 1 bis 5 oder hergestellt nach Anspruch 6 ohne eine vorgegebene Form auf eine Oberfläche aufgebracht werden.

11. Verwendung der Massen nach einem oder mehreren der Ansprüche 1 bis 6 zur Herstellung von Form-, Dichtkörpern, Dichtmassen oder Vergußmassen.

## Claims

1. Compositions which crosslink to form elastomers and are based on
(A) hollow polymer bodies
(B) addition-crosslinkable organosilicon compounds
(C) a silane having sulphur-containing functional groups, and if desired further organic sulphur compounds.

2. Compositions which crosslink to form elastomers according to Claim 1, which has a viscosity of from 1000 to 2,000,000 mPa•s.

3. Compositions which crosslink to form elastomers according to Claim 1 or 2, **characterized in that** the hollow polymer bodies (A) have a density of from 10 to 80 kg/m³ and a particle size of 5-200 µm.

4. Compositions which crosslink to form elastomers according to Claim 1, 2 or 3, **characterized in that** the organic sulphur compound has been applied to an inorganic filler.

5. Compositions which crosslink to form elastomers according to one or more of Claims 1, 2, 3 and 4, **characterized in that** the silane is 3-mercaptopropyltrimethoxysilane, 3-mercaptopropyl-triethoxysilane, a polydimethyl-siloxane-co-mercapto-alkyl compound and/or the organic sulphur compound is octadecane-1-thiol.

6. Process for producing compositions which crosslink to form elastomers according to one or more of Claims 1 to 5, **characterized in that** the components A, B and C are mixed.

7. Mouldings, seals or sealing compositions **characterized in that** they have been produced from a composition according to one or more of Claims 1 to 5 or by a process according to Claim 6.

8. Process for producing mouldings, seals or sealing compositions according to Claim 7, **characterized in that** comprises compositions according to one or more of Claims 1 to 5 or produced according to Claim 6 are cast into a mould.

9. Process according to Claim 8 for producing a seal, **characterized in that** the mould used is a groove.

10. Process for producing mouldings, seals or sealing compositions according to Claim 7, **characterized in that** compositions are applied according to one or more of Claims 1 to 5 or produced according to Claim 6 to a surface without provision of a mould.

11. Use of the compositions according to one or more of Claims 1 to 6 for producing mouldings, seals, jointing compositions or sealing compositions.

## Revendications

1. Matières réticulables en élastomères, à base
(A) de corps creux en matière plastique
(B) de composés organosiliciés réticulables par addition
(C) d'un silane à groupes fonctionnels soufrés, et éventuellement d'autres composés organiques soufrés.

2. Matières réticulables en élastomères selon la revendication 1, **caractérisées en ce qu'**elles ont une viscosité de 1 000 à 2 000 000 mPa.s.

3. Matières réticulables en élastomères selon la revendication 1 ou 2, **caractérisées en ce que** les corps creux en matière plastique (A) ont une densité de 10 à 80 kg/m³ et une taille de particules de 5-200 µm.

4. Matières réticulables en élastomères selon l'une quelconque des revendications 1, 2 ou 3, **caractérisées en ce que** le composé organique soufré est appliqué sur une charge minérale.

5. Matières réticulables en élastomères selon une ou plusieurs des revendications 1, 2, 3 ou 4, **caractérisées en ce que** le silane est le 3-mercaptopropyltriméthoxysilane, le 3-mercaptopropyltriéthoxysilane, un copolymère diméthylsiloxane/composé mercaptoalkyle et/ou le composé organique soufré est l'octadécane-1-thiol.

6. Procédé pour la préparation de matières réticulables en élastomères selon une ou plusieurs des revendications 1 à 5, **caractérisé en ce qu'**on mélange les composants A, B et C.

7. Corps moulés, d'étanchéité ou masses coulées, **caractérisés en ce qu'**ils sont produits à partir de matières selon une ou plusieurs des revendications 1 à 5 ou par un procédé selon la revendication 6.

8. Procédé pour la production de corps moulés, d'étanchéité ou de masses coulées selon la revendication 7, **caractérisé en ce que** des matières selon une ou plusieurs des revendications 1 à 5 ou préparées selon la revendication 6 sont coulées dans un moule.

9. Procédé selon la revendication 8, pour la production d'un corps d'étanchéité, **caractérisé en ce qu'**on utilise comme moule une rainure.

10. Procédé pour la production de corps moulés, d'étanchéité ou de masses coulées selon la revendication 7, **caractérisé en ce que** des matières selon une ou plusieurs des revendications 1 à 5 ou préparées selon la revendication 6 sont appliquées sans une forme préétablie sur une surface.

11. Utilisation des matières selon une ou plusieurs des revendications 1 à 6, pour la production de corps moulés, d'étanchéité, de masses d'étanchéité ou de masses coulées.
